# FASCICULE DE BREVET EUROPEEN

(11) **EP 2 678 296 B1**
(45) Date de publication et mention de la délivrance du brevet: **01.02.2017**
(21) Numéro de dépôt: 12703824.8
(22) Date de dépôt: 15.02.2012
(51) Int. Cl.: C05G 3/00, C05D 9/00, C05F 11/00

(54) **UTILISATION DE ZÉOLITHES EN APPORT D'OLIGOÉLÉMENTS**
VERWENDUNG VON ZEOLITHEN BEI DER MIKRONÄHRSTOFFVERSORGUNG
USE OF ZEOLITES IN SUPPLYING MICRONUTRIENTS

(30) Priorité: 22.02.2011 FR 1151430
(43) Date de publication de la demande: 01.01.2014
(73) Titulaire: Centre National de la Recherche Scientifique (C.N.R.S.), 75016 Paris (FR); Université De Poitiers, 86034 Poitiers Cedex (FR)
(72) Inventeur: CHOLLET, Jean-François, F-79390 Doux (FR); JOLY, Guy, F-86800 Lavoux (FR); MAGNOUX, Patrick, F-86000 Poitiers (FR)
(74) Mandataire: Lavoix
(86) Numéro de dépôt international: PCT/EP2012/052610
(87) Numéro de publication internationale: WO 2012/113689

(56) Documents cités:
- EP-A2- 0 290 350
- WO-A1-03/048076
- WO-A1-2005/117581
- AU-A- 6 456 594
- DE-A1-102004 023 865
- US-A1- 2003 153 466

## Description

La présente invention concerne l'utilisation de zéolithes pour apporter aux plantes des oligoéléments assimilables, notamment par une composition comprenant une zéolithe et un oligoélément. Le principal domaine d'application concerne l'agriculture, plus particulièrement la prévention ou la correction des carences avérées en oligoéléments des plantes cultivées en plein champ ou en culture hors-sol.

Les oligoéléments, notamment fer, cuivre, manganèse, zinc, bore, molybdène, participent à faibles doses à la nutrition des plantes. Une carence ou un excès de ces éléments peut provoquer des troubles de la végétation. Ainsi, la carence en fer se manifeste sous forme de chlorose des jeunes feuilles et peut avoir pour conséquence l'anéantissement de la récolte. Actuellement, le seul procédé existant pour corriger ces déficits consiste en des apports de fer complexé à des molécules organiques, en particulier l'acide éthylène diamine tétraacétique (EDTA) ou l'acide éthylène diamine-N,N-bis((2-hydroxyphényl) acétique) (EDDHA). De nombreuses méthodes connues se fondent sur l'utilisation de tels complexes. Ce sont les chélates, par exemple le chélate de fer utilisé pour corriger la chlorose ferrique. La technologie des chélates n'a plus guère évolué depuis la fin des années cinquante. Leur coût est élevé, ce qui en limite l'utilisation aux plantes à haute valeur ajoutée comme la vigne, les cultures maraîchères ou ornementales. Ces complexes sont pour la plupart très sensibles à la lumière qui les dégrade et certains d'entre-eux sont peu ou pas stables dans les sols alcalins. La teneur en oligoéléments n'est évidemment pas modulable. Par exemple, le chélate de fer-EDDHA contient 6% de fer. Une question qui se pose également est le devenir dans les sols des composés organiques chélatants.

Ces méthodes présentent de nombreux inconvénients tant du point de vue agronomique que du point de vue économique. En effet, la mise en oeuvre de tels complexes chélatés est coûteuse et n'est pas toujours efficace. Ces méthodes conduisent également à des problèmes environnementaux du fait qu'elles se fondent sur la dissémination de composés organiques.

US 2003/153466 A1 divulgue une composition à base de zéolithe de type jordanite.

DE 10 2004 023865 A1 divulgue un produit à base de zéolithe hydrophile , d'engrais et de fibres cellulosiques.

WO 03/048076 A1 divulgue un procédé de production d'un engrais comprenant de la zéolithe et de la bentonite.

On connait par WO-2005/117581 une composition sous forme d'un granulé comprenant notamment un agent de traitement des plantes et un coeur en zéolithe ainsi que différentes couches de diatomite ou d'un ou plusieurs autres matériaux. Ce document ne mentionne pas l'échange d'éléments au sein de la zéolithe mise en oeuvre, ni l'utilisation de quantités particulières d'oligoéléments assimilables et relatives à la quantité de zéolithe utilisée.

Ainsi, il existe un besoin permettant de pouvoir apporter aux plantes les oligoéléments nécessaires à leur croissance et qui ne présentent pas les inconvénients ni les problèmes des méthodes connues.

La présente invention concerne donc une méthode comprenant l'utilisation d'une zéolithe préparée de manière spécifique ou bien modifiée ou d'origine naturelle, dont des cations extra-réseau Na⁺ sont échangés avec d'autres cations impliqués dans la micronutrition des plantes, pour apporter aux plantes des oligoéléments ou mésoéléments assimilables en une quantité de 0,1 à 25% en masse de zéolithe.

Cette méthode permet de résoudre en tout ou partie les problèmes des méthodes connues.

Cette méthode permet notamment un apport optimal d'oligoéléments à proximité des racines de la plante. Dans le domaine agronomique, l'invention permet de libérer progressivement un élément minéral, en l'occurrence un oligoélément ou un mésoelément, au voisinage du système racinaire de la plante. Ceci permet une prévention ou une correction des carences lorsque nécessaire et sans laisser de résidu toxique dans le sol.

Par ailleurs, les zéolithes incorporées au sol ne sont pas polluantes puisqu'elles mettent en oeuvre de l'alumine et de la silice.

Cette méthode selon la présente invention présente notamment les avantages suivants par rapport aux méthodes connues qui mettent en oeuvre des chélates:
- les composés obtenus sont stables ;
- la teneur en oligoélément peut être modulée sans difficulté et elle peut être adaptée à des besoins particuliers ;
- aucun résidu toxique ne va subsister dans le sol.

De manière avantageuse, les zéolithes utilisées ont un caractère hydrophile et peuvent capter jusqu'à 30 à 35 % de leur poids en eau, en général sans variation de volume. Ainsi, les zéolithes apportées au sol par la méthode selon l'invention peuvent permettre une diminution de la fréquence des arrosages. Elles peuvent aussi capter des macroéléments (ammonium, potassium par exemple) de façon réversible, c'est-à-dire se comporter comme une zone de stockage temporaire et mettre à disposition de la plante ces éléments en fonction de ses besoins.

Par ailleurs, la mise en oeuvre de la méthode selon l'invention est particulièrement aisée et ne nécessite aucun matériel sophistiqué ou coûteux. Aucun produit toxique n'intervient dans cette méthode, le solvant utilisé étant généralement de l'eau déminéralisée, et la production de quantités importantes à l'échelle industrielle ne pose pas de problèmes particuliers. Les résidus de production, le plus souvent constitués d'eau et de sels minéraux, peuvent également être utilisés en agriculture en faisant un choix judicieux du sel utilisé au départ.

De plus, la méthode selon l'invention permet de libérer progressivement un élément minéral, en l'occurrence un oligoélément ou un mésoelément.

Ainsi, la présente invention concerne une méthode qui comprend l'utilisation d'une zéolithe préparée de manière spécifique ou bien modifiée ou d'origine naturelle, dont des cations extra-réseau Na⁺ sont échangés avec d'autres cations impliqués dans la micronutrition des plantes, pour apporter aux plantes des oligoéléments ou des mésoéléments assimilables en une quantité de 0,1 à 25% en masse de zéolithe.

Les zéolithes sont des dérivés aluminosilicates qui peuvent exister à l'état naturel ou bien avoir été modifiés ou préparés de manière spécifique. Il existe différents types de zéolithes. Trente-cinq zéolithes naturelles et plus d'une centaine de zéolithes de synthèse sont connues. Chaque type de zéolithe se caractérise par l'architecture et la taille de son réseau. La zéolithe faujasite (FAU) présente une structure identique à celle de la faujasite naturelle. Elle est constituée, tout comme les autres zéolithes, de tétraèdres SiO₄ et AlO₄⁻ connectés par leurs atomes d'oxygène : 24 tétraèdres reliés de manière à former 8 cycles à 6 tétraèdres et 6 cycles à 4 tétraèdres forment un cube-octaèdre encore appelé cage sodalite ou cage ß. La structure de la zéolithe FAU peut se décrire comme un assemblage de cubes-octaèdres reliés les uns aux autres par des prismes hexagonaux. Cet assemblage fait apparaître une cavité polyédrique à 26 faces appelée supercage et qui constitue l'unité de base de la microporosité de cette zéolithe. Les supercages sont assimilées à des pseudosphères de 13 Å de diamètre et de 850 Å³ de volume. Elles communiquent entre elles par l'intermédiaire d'ouvertures à 12 atomes d'oxygène (7,4 Å de diamètre). La cage ß a un diamètre de 7,4 Å et un volume de 160 Å³. Elle est connectée à la supercage par des ouvertures à 6 atomes d'oxygène de 3 Å de diamètre environ. La maille élémentaire de la zéolithe FAU comprend huit cages ß et seize prismes hexagonaux.

Pour la méthode selon l'invention, une ou plusieurs zéolithes peuvent être mises en oeuvre. La zéolithe peut être d'origine naturelle ou bien avoir été modifiée ou préparée de manière spécifique. De nombreuses zéolithes peuvent convenir pour la méthode selon l'invention. Comme exemples de telles zéolithes convenant pour la méthode selon l'invention, on peut citer les zéolithes décrites dans Zeolithes (1996), 17, pp 1-230 publié par Elsevier Science. La méthode selon l'invention comprend généralement la mise en oeuvre d'une zéolithe dont l'ouverture des pores est à 12 atomes.

Comme exemples de zéolithes à ouverture de pores à 12 atomes, on peut citer AFI (AlPAO₄-5), AFR (SAPO-40), AFS (MAPSO-46), AFY (CoAPO-50), ATO (AlPO₄.31), ATS (MAPO-36), BEA (Beta), BOG (Boggsite), BPH (Beryllophosphate-H), CAN (Cancrinite), CON (CIT-1), DFO (DAF-1), EMT (EMC-2), FAU (Faujasite), GME (Gmelinite °LTL (Linde type L), MAZ (Mazzite), MEI (ZSM-18), MOR (Mordenite), MTW (ZSM-12), OFF (Offretite), RON (Roggianite), VET (VPI-8).

Pour la méthode selon l'invention, une zéolithe dont l'ouverture des pores est à ouverture de 10 atomes ou 8 atomes peut également convenir.

Comme exemples de zéolithes à ouverture de pores à 10 atomes, on peut citer AEL (AlPO₄-11), AFO (AlPO₄-41), AHT (AlPO₄-H2), DAC (Dachiardite), EPI (Epistilbite), EUO (EU-1), FER (Ferrierite), HEU (Heulandite), LAU (Laumontite), MEL (ZSM-11), MFI (ZSM-5), MFS (ZSM-57), MTT (ZSM-23), NES (NU-87), -PAR (Partheite), STI (Stilbite), TON (Theta-1), WEI (Weinebeneite), WEN (Wenkite).
Comme exemples de zéolithes à ouverture de pores à 8 atomes, on peut citer ABW (Li-A (Barrer and White)), AEI (AlPO₄-18), AFT (AlPO₄-52), AFX (SAPO-56), APC (AlPO₄-C), APD (AlPO₄-D), ATN (MAPO-39), ATT (AlPO₄-12-TAMU), ATV (AlPO₄-25), AWW (AlPO₄-22), BIK (Bikitaite), BRE (Brewsterite), CAS (Cesium Aluminosilicate (Araki)), CHA (Chabazite), DDR (Deca-dodecasil 3R), EAB (TMA-E), EDI (Edingtonite), ERI (Erionite), GIS (Gismondine), GOO (Goosecreekite), JBW (NaJ (Barrer and White)), KFI (ZK-5), LEV (Levyne), LTA (Linde type A), MER (Merlinoite), MON (Montesommaite), NAT (Natrolite), PAU (Paulingite), PI-H (Phillilpsite), RHO (Rho), RTE (RUB-3), RTH (RUB-13), THO (Thomsonite), VNI (VP1-9), YUG (Yugawaralite), ZON (ZAPO-M1).
D'autres zéolithes à ouverture de pores à 9, 14, 18, ou 20 atomes peuvent convenir, par exemple CHI (Chiavennite), LOV (Lovdarite), RSN (RUB-17), VSV (VPI-7), CLO (Cloverite), VFI (VPI-5), AET (AlPO₄-8).
Les caractéristiques de ces zéolithes connues sont décrites dans Zeolithes (1996), 17, pp 1-230 publié par Elsevier Science, en particulier aux pages 9 à 12.

La méthode selon l'invention met en oeuvre une zéolithe comprenant des pores et des cages. Les pores de la zéolithe de la méthode selon l'invention doivent permettre l'échange de cations. Au sens de l'invention et de manière générale, la zéolithe présente des pores dont le diamètre est de 4 à 8 Å, de préférence de 5 à 7,5 Å, en particulier de 7,4 Å. De manière générale, la zéolithe présente un diamètre de supercage alpha de 13 Å.
Comme exemples de zéolithes au sein de la composition selon l'invention, on peut citer la zéolithe NaX, Si/AI = 1,18 et volume microporeux (VM) = 0,291 cm³/g, ou la zéolithe NaY, Si/AI = 2,43 et VM = 0,345 cm³/g, ou bien encore la zéolithe HY commerciale (HFAU40) avec Si/AI = 32 et VM = 0,245 cm³/g.
De manière préférée, la méthode selon l'invention met en oeuvre une zéolithe de type faujasite. Avantageusement, ces zéolithes présentent de larges pores. Elles peuvent être obtenues dans un large éventail de compositions en faisant varier le rapport Si/AI et peuvent être représentées par la formule (I)

Mⁿ⁺_{x/n}[(AlO₂)ₓ(SiO₂)₁₉₂₋ₓ].zH₂O (I)

dans laquelle
- Mⁿ⁺ représente un cation de charge n, en général représente 1 ou 2 ;
- x représente le nombre de cations ;
- [ ] représente le réseau silico-aluminate caractérisé par le rapport Si/Al ;
- z représente le nombre de molécules d'eau zéolithiques.

Comme exemples de zéolithes, on connaît notamment deux grands types de faujasite selon la composition Si/Al :
- les faujasites X, dont le rapport Si/Al est compris entre 1 et 1,5 ;
- les faujasites Y, dont le rapport Si/Al est compris entre 1,5 et 3.
Des faujasites présentant des rapports plus élevés peuvent être préparées par des procédés de désalumination, en particulier des procédés de désalumination post synthèse.
Comme zéolithes avantageuses selon l'invention, on peut citer les zéolithes FAU depuis une zéolithe totalement désaluminée jusqu'à la faujasite NaX, Na₉₆FAU.
De manière générale selon l'invention, les paramètres de maille et les positions atomiques de la zéolithe utile selon l'invention, en particulier la faujasite, ont été fixés, selon un modèle rigide. Il est également possible d'utiliser des zéolithes, en particulier la faujasite, présentant une certaine liberté de mouvement, notamment des cations ; les déformations des ouvertures peuvent également influer sur la description de la quantité de molécules stockées et sur la dynamique de désorption de la composition selon l'invention.
De manière avantageuse, la méthode selon l'invention met oeuvre une zéolithe hydrophile. Une telle zéolithe hydrophile peut être choisie parmi les zéolithes déshydratées, en particulier parmi les zéolithes déshydratées et à ouverture de pores à 12, 10 ou 8 atomes. De manière habituelle, une telle zéolithe déshydratée peut être obtenue par les techniques usuelles de déshydratation.
La méthode selon l'invention comprend avantageusement la mise en oeuvre d'une zéolithe hydrophile dont le rapport Si/Al est compris entre 1 et 2000, de préférence entre 1 et 1000, notamment entre 5 et 100.

L'invention met en oeuvre des zéolithes possèdant des cations compensateurs extra-réseau dont le rôle est de neutraliser la charge négative localisée sur les tétraèdres AlO₄⁻ du réseau. Ces cations extra-réseau sont des ions Na⁺ et ils vont pouvoir s'échanger avec d'autres cations, notamment les cations impliqués dans la micronutrition des plantes. Dans la formule (I), M représente un tel cation compensateur.
La granulométrie de la zéolithe mise en oeuvre selon l'invention peut être choisie afin d'améliorer l'efficacité de la méthode selon l'invention. La granulométrie de la zéolithe est généralement comprise entre 0,01 et 0,8 mm, de préférence entre 0,1 et 0,5 mm, en particulier entre 0,2 et 0,4 mm. Une fois formulée, la zéolithe peut se présenter sous d'assez nombreuses formes, par exemple sous forme extrudée ou bien sous forme de granulés, généralement réalisés à partir de zéolithe en poudre et d'un agent liant.

Outre une zéolithe, la méthode selon l'invention met en oeuvre un oligoélément. Plusieurs oligoéléments peuvent également être mis en oeuvre. Un grand nombre d'oligoéléments peuvent convenir.
Selon la méthode de l'invention, l'oligoélément peut être inclus au sein de la zéolithe mise en oeuvre.
De manière avantageuse, l'oligoélément est choisi en fonction de la zéolithe mise en oeuvre, en particulier en fonction des paramètres de taille de pore, de volume de cage et du nombre d'atomes d'aluminium présents dans la structure de la zéolithe. Ainsi, l'oligoélément se trouve inclus au sein de la zéolithe. Au sein de la zéolithe, l'oligoélément se trouve en position d'échange, en particulier par l'établissement de liaisons ioniques avec les atomes d'oxygène de la structure de la zéolithe. Au sein de la composition selon l'invention, tout ou partie de l'oligoélément peut également se trouver en dehors du réseau que constitue la zéolithe.
De nombreux oligoéléments peuvent convenir pour l'invention. Ces oligoéléments sont préférentiellement choisis en fonction de leur rôle pour la plante, notamment dans les réactions d'oxydoréduction du système enzymatique de ces plantes, en particulier la photosynthèse, la fixation de l'azote, la réduction des nitrates dans la plante, l'altération de la respiration mitochondriale, etc. Ainsi, l'oligoélément peut être choisi parmi le cuivre, le manganèse, le zinc, le molybdène et le fer ; de préférence le fer ou le cuivre.
D'autres éléments peuvent jouer un rôle utile pour certaines espèces végétales, notamment le cobalt et le sélénium qui peuvent être mis en oeuvre comme oligoélément selon l'invention. Pour l'invention, il convient aussi de prendre en considération les mésoéléments qui sont les éléments intermédiaires entre les éléments majeurs et les oligoéléments, par exemple le calcium et le magnésium.
Pour la présente invention, l'oligoélément qui est mis en oeuvre peut être remplacé ou combiné à un ou plusieurs mésoéléments.
Dans le cas des zéolithes faujasites, les cations compensateurs extra-réseau sont généralement répartis sur trois types des sites principaux :
- les sites I se trouvent au centre des prismes hexagonaux (16 positions par maille) ;
- les sites II se trouvent dans la supercage, centrés sur les fenêtres hexagonales des blocs sodahtes (32 positions par maille) ;
- les sites III sont localisés au niveau des fenêtres de la supercage, hors des axes cristallographiques de la zéolithe (la présence des sites III est spécifique aux structures de type X) ; ainsi que sur
- les sites secondaires I', II' et III' qui correspondent à des positions symétriques aux sites I, II et III par rapport au plan délimité par la plus proche fenêtre hexagonale d'un bloc sodalite.

De manière particulièrement avantageuse, l'invention met en oeuvre une zéolithe de type NaX en combinaison avec du fer.

Pour la présente invention, la quantité d'oligoélément varie de 0,1 à 25% en masse de zéolithe, de préférence cette quantité varie de 1 à 20%, par exemple de 1,5 à 15% en masse de zéolithe.

L'invention concerne également une méthode de préparation d'une composition mise en oeuvre selon l'invention. De manière particulièrement avantageuse, la composition selon l'invention peut être préparée selon une méthode très efficace et aisée. Cette méthode met en oeuvre le principe général d'échange d'ions de la zéolithe par le ou des cations des oligoéléments choisis. Cet échange est réalisé sous agitation et en milieu liquide, par exemple dans de l'eau.
Ainsi, pour un échange d'ion donné, la zéolithe est mise en contact d'une solution aqueuse de sel, par exemple de nitrate, de sulfate, de chlorure ou d'acétate du cation à substituer aux ions de la zéolithe, par exemple Na⁺. La zéolithe est maintenue en suspension par agitation, généralement à température ambiante, dans une solution saline dont la concentration peut être adaptée selon le taux d'échange visé. Cette agitation est généralement maintenue pendant un temps pouvant aller de quelques minutes à plusieurs heures, par exemple de 0,5 à 20h, en particulier de 2 à 10h, par exemple pendant 8h. Une concentration de la solution saline d'environ 1 mol.l⁻¹ suffit pour avoir un échange maximum. Pour des échanges mettant en oeuvre de 5 à 25 g de zéolithe, le volume de solution utilisé est par exemple égal à 10 ml par gramme de zéolithe hydratée à échanger. La zéolithe est ensuite lavée (par exemple, pour 5 g de zéolithe avec 3 x 50 ml d'eau), isolée par filtration, par exemple sur Büchner, puis séchée, par exemple à l'étuve à une température pouvant varier autour de 80°C pendant une durée d'environ 2 à 20h, en particulier de 6 à 12h.
Selon la méthode de préparation selon l'invention, il est possible de mesurer et de contrôler le taux d'échanges de la zéolithe utilisée. Ainsi, l'analyse élémentaire des éléments de la zéolithe, par exemple Al, Si, Na et le cation compensateur, peut être réalisée par la technique d'émission ICP (induced coupled plasma).
De manière avantageuse, la méthode de préparation selon l'invention permet de préparer des compositions dont la teneur en oligoélément varie de 0,1 à 20% en masse de zéolithe, de préférence allant de 1 à 15% en masse de zéolithe.

Ainsi, à partir de nitrate de cuivre (Cu(NO₃)₂,3H₂O), il est possible de préparer des zéolithes de type X avec des teneurs en cuivre comprises entre 1 et 10 %. Les analyses ICP des zéolithes hydratées obtenues conduisent à des taux ioniques en pourcentage de Cu dans la zéolithe X (masse/masse) de 1,22, 4,60, 6,97 et 10,1%.
Pour des préparations à grande échelle, notamment de l'ordre de 20 kg de zéolithe NaX, une teneur de 5 % en cuivre est accessible. De même, à partir de zéolithe NaX et en utilisant du chlorure ferreux (FeCl₂,4H₂0), des zéolithes à des taux allant de 1 à 20 % (masse/masse) peuvent être préparées, notamment à des taux allant de 2 à 12 %.
Des zéolithes échangées au magnésium peuvent également être préparées, par exemple avec une faujasite NaY. Dans ce cas, un taux d'échange cationique de 0,32 correspond à une teneur en magnésium de 1,2 % (masse/masse).
Lors de la préparation de la composition selon l'invention, le suivi de l'échange peut être réalisé par dosage selon une méthode spectrométrique, par exemple à la phénanthroline-1,10 (norme Afnor NF T 90-017) pour le dosage du fer.

Le matériel nécessaire à la préparation de la composition mise en oeuvre selon l'invention est relativement simple. Il peut s'agir d'un contenant et d'un système d'agitation adaptés aux quantités à préparer : par exemple, flacons en verre et agitateur orbital pour des volumes de l'ordre du litre, bidons ou cuves en matière plastique et moteur d'agitation avec agitateur à pales pour des volumes de quelques dizaines de litres ou davantage. Des dispositifs analogues sont mis en oeuvre pour des préparations à des échelles supérieures, notamment à l'échelle industrielle.
De manière avantageuse, la phase aqueuse récupérée après filtration peut être réutilisée plusieurs fois. Elle s'enrichit ainsi progressivement en cation compensateur en provenance de la zéolithe, par exemple Na⁺ mais également NH₄⁺, Mg²⁺ pour une valorisation ultérieure de cette solution, en particulier pour la nutrition des végétaux en association avec l'anion issu du sel mis en oeuvre pour l'échange de cation, par exemple NO₃⁻, SO₄²⁻, PO₄³⁻. Ainsi, cette solution peut être recyclée et valorisée du fait de la présence, par exemple, de nitrate de sodium ou de nitrate d'ammonium.
L'invention concerne donc également une telle méthode dont les sous-produits sont valorisables et choisis parmi les sels du cation échangé de la zéolithe et du contre-anion de l'oligoélément ou du mésoélément mis en oeuvre.

L'invention concerne également une méthode de traitement de plantes au moyen d'une composition comprenant une zéolithe échangée ou comprenant un ou plusieurs oligoéléments. De manière particulièrement avantageuse, la méthode de traitement selon l'invention permet de contrôler le relargage de l'oligoélément.

La méthode de traitement selon l'invention met le plus souvent en oeuvre des doses d'oligoéléments allant de 0,1 à 600 000 g/ha, de manière préférée de 10 à 50 000 g/ha, par exemple de 50 à 20 000 g/ha. De manière avantageuse, la méthode selon l'invention met en oeuvre une dose d'oligoélément appliquée par pied de plante traitée. En particulier, la méthode selon l'invention peut être mise en oeuvre par pied ou cep de vigne ou par arbre fruitier. Ainsi, pour le fer, ces doses peuvent aller de 0,12 à 0,30 g par cep de vigne ou de 1,8 à 15 g par arbre fruitier.
Ces doses pourront être adaptées selon la composition selon l'invention qui est utilisée ainsi que selon les conditions climatiques, les éventuels phénomènes de résistance ou d'autres facteurs naturels, la nature du traitement ou le degré de carence, ainsi que selon les plantes ou les lieux à traiter.
Le plus souvent pour le traitement des plantes, la composition mise en oeuvre selon l'invention permet un relargage de l'oligoélément en fonction de l'équilibre de désorption déclenché par la plante. Il est ainsi possible de réduire les pertes d'oligoélément dans le sol du fait que l'oligoélément pénètre dans la plante puis circule au sein de celle-ci, déplaçant l'équilibre de désorption en fonction de cette pénétration directement au sein de la plante. Lors de la mise en oeuvre de la méthode de traitement selon l'invention, l'oligoélément désorbe le plus souvent de manière linéaire. Toutefois, certains facteurs peuvent permettre d'adapter ou d'influencer cette désorption.
Ainsi, le caractère hydrophile (caractérisé par le rapport Si/AI) de la zéolithe peut influencer la vitesse de désorption dans l'eau (désorption statique) : généralement, plus la zéolithe est hydrophile, plus la désorption est rapide et constante ; la granulométrie peut également permettre une variation de la vitesse de désorption de l'oligoélément, un mélange judicieux de diverses granulométries peut permettre de jouer sur la rémanence et de maîtriser la quantité de la matière active libérée au cours du temps ; le taux de chargement peut également avoir une influence, une zéolithe chargée au maximum libère habituellement une quantité plus importante d'oligoéléments qu'une zéolithe faiblement ou moyennement chargée.
En agissant sur l'ensemble de ces facteurs de façon spécifique ou combinée, on peut donc arriver à une combinaison zéolithe-oligoélément présentant le comportement souhaité : en particulier, une désorption lente et constante de l'oligoélément dans le temps, évitant ainsi un apport trop massif.

Les plantes pouvant être traitée par la méthode selon l'invention peuvent être choisies parmi : coton ; lin ; vigne ; fruits et légumes telles que *Rosaceae sp.* (par exemple fruits à pépins comme poires ou pommes, fruits à noyaux comme abricot, amande et pèche), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (par exemple banane, plantins), *Rubiaceae sp., Theaceae sp., Sterculiceae sp., Rutaceae sp.* (par exemple citron, orange, pamplemousse); *Solanaceae sp.* (par exemple tomates, pommes de terre, poivrons, aubergines), *Liliaceae sp., Asteraceae sp.* (par exemple salade), *Umbelliferae sp., Chenopodiaceae sp., Cucurbitaceae sp., Papilionaceae sp.* (par exemple pois), *Rosaceae sp.* (par exemple fraise); cultures majeures telles que *Graminae sp.* (par exemple mais, gazon, céréales telles que blé, riz, avoine, orge, triticale), *Asteraceae sp.* (par exemple tournesol), *Cruciferae sp.* (par exemple colza), *Fabacae sp.* (par exemple cacahouète, pois, haricots), *Papilionaceae sp.* (par exemple soja), *Chenopodiaceae sp.* (par exemple betterave); plantes oléagineuses telles que *Brassta napus* (par exemple *canola*), *Brassica rapa, Brassica juncea* (par exemple moutarde) ; *Brassica carinata ; Ribesioidae sp., Jugle*t*aceae sp., Betulaceae sp., Anacardiaceae sp., Fagaceae sp., Moraceae sp., Oleaceae sp., Actinidaceae sp., Lauraceae sp., Rubiaceae sp.* (tel le caféier), *Theaceae sp., Sterculiceae sp., Liliaceae sp., Compositiae sp.* (telles que laitue, artichaut, endive, chicorée), *Umbelliferae sp.* (telles que carottes, persil, céleri), *Cucurbitaceae sp.* (telles que cocombre, melons, courges), *Alliaceae sp.* (telles que oignons, ail), *Cruciferae sp.* (telles que choux, broccoli, chou pak choi, radis, cresson), *Leguminosae sp., Chenopodiaceae sp.* (telles qu'épinards, betteraves), *Malvaceae sp., Asparagaceae,* cultures horticoles, par exemple de rosiers, et forestières; ou encore les homologues modifiées génétiquement de ces plantes.
La méthode de traitement selon l'invention permet également de mieux lutter contre certaines carences des plantes pour lesquelles n'existent que peu de solutions efficaces. Par exemple, la méthode de traitement selon l'invention permet de lutter contre les carences en fer ou chlorose ferrique, en particulier de la vigne ou de rosiers.

Les exemples suivants illustrent le procédé de l'invention, en particulier les avantages de ce procédé.

### Exemple 1 : préparation de compositions de zéolithes faujasites NaX échangées au cuivre

La composition comprenant une zéolithe échangée est préparée à partir d'une zéolithe faujasite Na₈₈X (Si/AI = 1,2) synthétisées industriellement par Ceca (La Garenne Colombes, France). La zéolithe employée est utilisée telle quelle, c'est-à-dire qu'elle ne contient pas de liant et n'est pas mise en forme au départ.
On utilise un flacon en verre et un agitateur orbital. La zéolithe est mise en contact d'une solution aqueuse de nitrate de cuivre (Cu(NO₃)₂,3H₂0) afin de remplacer les ions Na⁺ par du cuivre. La zéolithe est maintenue en suspension par agitation pendant 8 heures à température ambiante dans la solution saline dont la concentration varie en fonction du taux d'échange désiré. Pour avoir un échange maximum, la concentration de la solution est d'environ 1 mol.l⁻¹. Pour des échanges mettant en oeuvre de 5 à 25 g de zéolithe, le volume de solution utilisé est égal à 10 ml par gramme de zéolithe hydratée à échanger. La zéolithe est ensuite lavée (pour 5 g de zéolithe, 3 x 50 ml d'eau), isolée par filtration sur Büchner puis séchée à l'étuve (80 °C pendant une nuit).
Le taux d'échange des zéolithes obtenues est calculé à partir de l'analyse élémentaire des faujasites (pourcentages massiques en Al, Si, Na et cation compensateur) réalisée par la technique d'émission ICP (Induced Coupled Plasma). Les analyses ICP des zéolithes hydratées obtenues conduisent aux taux ioniques présentés dans le tableau 1.

**Tableau 1**

| Exemple | 1.1 | 1.2 | 1.3 | 1.4 |
|---|---|---|---|---|
| Quantité de Cu dans la zéolithe X (% masse/masse) | 1,22 | 4,60 | 6,97 | 10,1 |

### Exemple 2 : préparation de compositions de zéolithes faujasites NaX échangées au fer

Selon la méthode de l'exemple 1, la composition comprenant une zéolithe échangée est préparée en utilisant du chlorure de fer (FeCl₂,4H₂O).
Le taux d'échange des zéolithes obtenues est calculé à partir de l'analyse élémentaire des faujasites (pourcentages massiques en Al, Si, Na et cation compensateur) réalisée par la technique d'émission ICP (Induced Coupled Plasma). Les analyses ICP des zéolithes hydratées obtenues conduisent aux taux ioniques présentés dans le tableau 2.

**Tableau 2**

| Exemple | 2.1 | 2.2 | 2.3 | 2.4 |
|---|---|---|---|---|
| Quantité de Fe dans la zéolithe X (%masse/masse) | 0,96 | 4,98 | 7,10 | 10,30 |

### Exemple 3: préparation de compositions de zéolithes faujasites NaY échangées au magnésium

Selon la méthode de l'exemple 1, la composition comprenant une zéolithe échangée est préparée en utilisant du chlorure de magnésium (MgSO₄). La composition comprenant une zéolithe échangée est préparée à partir d'une zéolithe faujasite Na₅₆Y (Si/AI = 2,4) synthétisées industriellement par Zeolyst International (Conshohocken, Pennsylvania, USA). Le taux d'échange des zéolithes obtenues est calculé à partir de l'analyse élémentaire des faujasites (pourcentages massiques en Al, Si, Na et cation compensateur) réalisée par la technique d'émission ICP (Induced Coupled Plasma). Les analyses ICP de la zéolithe hydratée obtenue montrent un taux ionique correspondant à une quantité de Mg dans la zéolithe Y (%masse/masse) de 1,2%.

### Exemple 4 : préparation de compositions de zéolithes faujasites NaX échangées au cuivre à l'échelle semi-industrielle

La composition comprenant une zéolithe échangée est préparée à partir d'une zéolithe faujasite Na₈₈X (Si/Al = 1,2) synthétisée industriellement par Ceca (La Garenne Colombes, France). La zéolithe employée est utilisée telle quelle, c'est-à-dire qu'elle ne contient pas de liant et n'est pas mise en forme au départ : 5 kg de zéolithe NaX sont dispersés dans une solution de 15 litres d'eau distillée contenant 915 g de nitrate de cuivre trihydraté. Après 8 heures d'agitation mécanique, la solution est décantée durant 24 heures La phase aqueuse supérieure est alors soutirée à l'aide d'une pompe puis la zéolithe est séchée à l'étuve à 80°C pendant 8 heures. La zéolithe ayant une teneur de 5 % en cuivre ainsi obtenue est prête â l'emploi.
On notera la simplicité et la rapidité de la mise en oeuvre du procédé.

### Exemple 5 : traitement de plants de rosiers avec une composition selon l'invention

Les zéolithes préparées selon l'exemple 2 ont été évaluées pour leur capacité à corriger des carences, notamment en fer (chlorose ferrique), carence courante et aisée à identifier. Les plantes chlorosées ont été obtenues en travaillant en milieu hydroponique afin de parfaitement contrôler les apports nutritifs.
Des rosiers nains ont été bouturés sur de la vermiculite, un substrat inerte ayant de bonnes capacités de rétention d'eau. Les plantes sont disposées sur 3 tables à marées irriguées de façon indépendante par immersion des pots à raison de 30 minutes par jour dans un liquide nutritif élaboré d'après la formule de Hoagland et Snyder, Proc. Amer. Soc. Hort. Sci., 30, p288, 1933.
Trois lots de plantes sont ainsi constitués:
- un premier lot témoin reçoit le liquide nutritif dans l'apport en fer a été supprimé ;
- un second lot reçoit le liquide nutritif dans lequel le fer est apporté par un chélate de fer EDDHA (Sequestrène^{®}, 6 % en fer) à raison de 17 mg de produit commercial par litre de solution (environ 1 mg de fer par litre soit 17,9 µM), enfin
- un troisième lot reçoit une solution nutritive identique au lot témoin, c'est-à-dire dépourvue de fer. Cependant, dans ce cas, une zéolithe dopée à environ 5 % de fer (préparée selon l'exemple 2.2) est directement incorporée au sein du substrat de culture à raison de 2 doses différentes: 0,2 g ou 1 g par pot ce qui représente, respectivement, un apport de 0,01 et 0,05g de fer par pot. La zéolithe a été répartie sur la surface du pot puis incorporée légèrement en surface.
Au départ, les boutures sont arrosées à l'eau puis placées sous un voile de forçage durant 2 semaines sans autre arrosage supplémentaire, ceci afin d'avoir une hygrométrie maximale favorisant la naissance des racines. Le voile est ensuite enlevé et le cycle quotidien d'irrigation est mis en place.
Les boutures irriguées par une solution dépourvue de fer dans sa composition ne se développent pas et finissent par disparaître. Les plantes qui reçoivent la solution nutritive supplémentée en chélate de fer se développent avec cependant une tendance chlorotique certainement due à un apport en fer insuffisant. Les plantes qui ont reçu par pot 0,2 g de zéolithe dopée à environ 5 % de fer ont un aspect tout à fait similaire aux plantes traitées par le chélate de fer. Enfin, les plantes ayant reçu 1 g de zéolithe dopée à environ 5 % de fer par pot ne présentent aucun signe apparent de carence.
La chlorose ferrique a donc été parfaitement corrigée et les plantes ont pu reprendre une croissance normale. De plus, une fois la totalité du fer libérée, il ne restera au sol que la zéolithe non polluante qui pourra même jouer un rôle secondaire bénéfique de « tampon » pour des macroéléments comme l'azote ou le potassium.

### Exemple 6 : traitement de plants de vigne avec une composition selon l'invention

Les expériences de l'exemple 5 ont été reproduites sur vigne, une plante également très sensible aux carences ferriques. Des boutures de vigne à deux yeux (jeunes rameaux de l'année précédente) sont plantées dans des pains de laine de roche, ces derniers étant ensuite disposés sur des tables à marées pour une irrigation quotidienne par immersion (2 x 20 minutes/jour). La solution nutritive utilisée dans ce cas était à base d'engrais soluble Scotts (Peter professionnal, 20-20-20 General Purpose™). Cet engrais contient 0,05 % de chélate de fer-DTPA, quantité insuffisante dans le cas de la vigne puisque les symptômes caractéristiques d'une chlorose ferrique apparaissent rapidement lors de la pousse des parties herbacées.
75 jours après le bouturage, deux 2 lots distincts de plantes sont constitués:
   - le premier a reçu la solution nutritive de base supplémentée en chélate de fer-EDDHA (Sequestrène^{®}, au final 27,9 µM de fer en solution) ;
   - le second a été arrosé avec la solution nutritive de base et une zéolithe dopée au fer a été incorporée dans les pains de laine de roche : 8 trous ont été percés à mi-hauteur des pains sur leur pourtour dans lesquels ont été répartis soit 0,25 g, soit 1 g de zéolithe à environ 5 % de fer (produite selon l'exemple 2.2).
75 jours après la mise en culture sur pains de laine de roche (jour J), on note un fort jaunissement des feuilles dû à une carence en chlorophylle engendrée par un déficit en fer. L'addition de Sequestrène^{®} (chélate de fer-EDDHA) à la solution nutritive à J+12 entraine un reverdissement des feuilles qui n'est pas total.

L'incorporation au sein du pain de laine de roche de zéolithe dopée à environ 5 % de fer à J+6 conduit à un début de reverdissement de la plante.

L'incorporation au sein du pain de laine de roche de zéolithe dopée à environ 5 % de fer à J+43 conduit à ce que les plantes se développent très vigoureusement, plus aucune trace de carence n'est visible.

Aucune différence notable n'apparait entre les deux doses appliquées (0,2 et 1 g de zéolithe à environ 5 % de fer par plante) sur la période considérée.
Une incorporation unique de zéolithes dopées au fer au sein du substrat de culture a donc montré une efficacité biologique au moins équivalente à celle obtenue en supplémentant continuellement la solution nutritive avec du fer chélaté par un composé organique (EDDHA). La carence est parfaitement corrigée et de façon durable. De plus, une fois la totalité du fer libérée, il ne restera au sol que la zéolithe non polluante qui pourra même jouer un rôle secondaire bénéfique de « tampon » pour des macroéléments comme l'azote ou le potassium.

### Exemple 7 : traitement de plants de rosiers avec une composition selon l'invention, maîtrise de la morphogenèse et résistance aux maladies

Afin d'évaluer la possibilité de remplacer les traitements connus pour contrôler la morphologie des plantes ligneuses et ornementales, notamment de rosiers, des expérimentations ont été menées selon l'utilisation de l'invention.

De manière habituelle, la morphologie des plantes ligneuses ornementales est maîtrisée par l'horticulteur à l'aide d'agents régulateurs de croissance. Le paclobutrazol appartenant à la famille des triazoles est l'une des matières actives que l'on peut trouver dans ces produits régulateurs de croissance. Cette molécule inhibe la biosynthèse des gibbérellines responsables notamment de l'allongement des entre-noeuds.

Cependant, la toxicité des triazoles engage l'utilisateur à prendre d'importantes précautions et à respecter de longues périodes de rémanences, par exemple de 120 jours sur colza ou de 30 jours sur pêcher.

Lors de son application sur les cultures, l'agent régulateur de croissance induit une réduction de la croissance longitudinale et une augmentation de la croissance radiale. L'horticulteur obtient ainsi des plantes aux tiges trapues ayant un port érigé permettant de soutenir de nombreuses inflorescences.

Il s'agit donc de substituer les traitements au paclobutrazol dans la maîtrise de la morphogenèse des plantes ornementales.

Selon l'utilisation de l'invention, des combinés zéolithe/cuivre sont incorporés dans les substrats de culture ou apporté via une solution nutritive.

Il a ainsi été possible de supprimer les pulvérisations foliaires tout en permettant une libération lente et durable du cuivre à proximité du système racinaire et d'ainsi contrôler les concentrations en cuivre disponibles pour la plante traitée.

Les concentrations de cuivre absorbées par la plante ont été analysées par dosage du cuivre dans la sève xylémienne par absorption atomique. Ainsi, la sève xylémienne de rosiers cultivés sur un substrat dans lequel une zéolithe à 1% de cuivre a été incorporée contient 4,35 ± 0,5 µmol.l⁻¹ de cuivre, alors que la sève de plantes témoins cultivées dans les mêmes conditions sur le substrat seul n'en contient que 0,8 ± 0,05 µmol.l⁻¹, soit plus de 5 fois moins. Le cuivre a donc été libéré par la zéolithe et ensuite absorbé par la plante. Il y a donc assimilation du cuivre par la plante.

Lors de traitement de plants de rosiers (variété Marseille commercialisée sous la marque Forever) en incorporant une zéolithe à 1% de Cu au substrat de culture, il a été montré une diminution de la croissance longitudinale ainsi qu'une augmentation de la croissance radiale de la tige principale en comparaison de plantes témoins (Tableau 3). Au niveau du premier entre-noeud, le diamètre de la tige des plantes cultivées sur un substrat contenant une zéolithe échangée à 1% de Cu est accru d'environ 10% (exemple 7.3) en comparaison de plantes témoins (exemple 7.1) ou traitées au paclobutrazol (exemple 7.2). Au niveau du 4^{e} entre-noeud, le diamètre de la tige des plantes cultivées sur un substrat contenant une zéolithe échangée à 1% de Cu est accru d'environ 13% (exemple 7.6) en comparaison de plantes témoins (exemple 7.4) et il est identique à celui des plantes traitées au paclobutrazol (exemple 7.5). Pour ce qui est de la longueur de la tige, l'effet du traitement avec la zéolithe échangée à 1% de Cu (exemples 7.3 et 7.6) est identique à celui effectué avec le paclobutrazol (exemples 7.2 et 7.5) et ce, tant au niveau du premier entre-noeud que du quatrième. On observe alors une réduction d'environ 25% de la longueur de la tige par rapport à des plantes témoins n'ayant reçu aucun traitement (exemples 7.1 et 7.4). Globalement, le traitement par incorporation au substrat de zéolithe échangée à 1% de Cu donne des plantes plus homogènes que les pulvérisations de paclobutrazol.

**Tableau 3**

| Mesure | Niveau du 1^{er} entre-noeud | | | Niveau du 4^{e} entre-noeud | | |
|---|---|---|---|---|---|---|
| Exemple | 7.1 | 7.2 | 7.3 | 7.4 | 7.5 | 7.6 |
| | Témoin | Traitement Paclobutrazol | Traitement zéolithe 1% Cu | Témoin | Traitement Paclobutrazol | Traitement zéolithe 1% Cu |
| Diamètre de la tige (mm) | 2,90 ± 0,02 | 2,90 ± 0,034 | 3,23 ± 0,01 | 2,86 ± 0,027 | 3,20 ± 0,04 | 3,23 ± 0,013 |
| Longeur de la tige (cm) | 2,60 ± 0,35 | 1,90 ± 0,32 | 2,00 ± 0,27 | 2,90 ± 0,50 | 2,20 ± 0,46 | 2,00 ± 0,32 |

Les zéolithes échangées avec du cuivre, permettent d'obtenir des plants de rosiers présentant des tiges trapues et lignifiées sans application de régulateurs de croissances (en comparaison de l'usage de paclobutrazol, nom commercial Bonzi, commme régulateur de croissance de référence en floriculture).
Par contrôle visuel et comparaison (tableau 3), on constate que la taille des tiges dans chaque pot traité par la combinaison zéolithe/cuivre selon l'invention est homogène. Les tiges sont bien florifères et ramifiées. La lignification des tissus xylémiens, notamment des parois des fibres est accrue. Ainsi, la croissance longitudinale des tiges sera limitée au profit de la croissance radiale.

Ces traitements à 1% de cuivre par rapport à la quantité de zéolithe ont également permis de constater une résistance aux maladies par une diminution de la sensibilité à l'oïdium des plantes traitées.

De plus, la lignification des tissus xylémiens des tiges et des feuilles renforce la structure pariétale. Par conséquent, le rôle de barrière physique que constitue la paroi est accru, réduisant la sensibilité des plantes vis-à-vis des pathogènes, notamment des champignons de surface comme l'oïdium.

## Revendications

1. Utilisation d'une zéolithe préparée de manière spécifique ou bien modifiée ou d'origine naturelle, dont des cations extra-réseau Na⁺ sont échangés avec d'autres cations impliqués dans la micronutrition des plantes, pour apporter aux plantes des oligoéléments ou mésoéléments assimilables en une quantité de 0,1 à 25% en masse de zéolithe.

2. Utilisation selon la revendication 1
- d'une zéolithe dont l'ouverture des pores est à 12 atomes et qui est choisie parmi AFI (AlPO₄-5), AFR (SAPO-40), AFS (MAPSO-46), AFY (CoAPO-50), ATO (AlPO₄.31), ATS (MAPO-36), BEA (Beta), BOG (Boggsite), BPH (Beryllophosphate-H), CAN (Cancrinite), CON (CIT-1), DFO (DAF-1), EMT (EMC-2), FAU (Faujasite), GME (Gmelinite), LTL (Linde type L), MAZ (Mazzite), MEI (ZSM-18), MOR (Mordenite), MTW (ZSM-12), OFF (Offretite), RON (Roggianite), VET (VPI-8) ; ou
- d'une zéolithe dont l'ouverture des pores est à 10 atomes et qui est choisie parmi AEL (AlPO₄-11), AFO (AlPO₄-41), AHT (AlPO₄-H2), DAC (Dachiardite), EPI (Epistilbite), EUO (EU-1), FER (Ferrierite), HEU (Heulandite), LAU (Laumontite), MEL (ZSM-11), MFI (ZSM-5), MFS (ZSM-57), MTT (ZSM-23), NES (NU-87), -PAR (Partheite), STI (Stilbite), TON (Theta-1), WEI (Weinebeneite), WEN (Wenkite) ; ou
- d'une zéolithe dont l'ouverture des pores est à 8 atomes et qui est choisie parmi ABW (Li-A (Barrer and White)), AEI (AlPO₄-18), AFT (AlPO₄-52), AFX (SAPO-56), APC (AlPO₄-C), APD (AlPO₄-D), ATN (MAPO-39), ATT (AlPO₄-12-TAMU), ATV (AlPO₄-25), AWW (AlPO₄-22), BIK (Bikitaite), BRE (Brewsterite), CAS (Cesium Aluminosilicate (Araki)), CHA (Chabazite), DDR (Deca-dodecasil 3R), EAB (TMA-E), EDI (Edingtonite), ERI (Erionite), GIS (Gismondine), GOO (Goosecreekite), JBW (NaJ (Barrer and White)), KFI (ZK-5), LEV (Levyne), LTA (Linde type A), MER (Merlinoite), MON (Montesommaite), NAT (Natrolite), PAU (Paulingite), PI-H (Phillilpsite), RHO (Rho), RTE (RUB-3), RTH (RUB-13), THO (Thomsonite), VNI (VP1-9), YUG (Yugawaralite), ZON (ZAPO-M1) ; ou
- d'une zéolithe dont l'ouverture des pores est à 9, 14, 18, ou 20 atomes et qui est choisie parmi CHI (Chiavennite), LOV (Lovdarite), RSN (RUB-17), VSV (VPI-7), CLO (Cloverite), VFI (VPI-5), AET (AlPO₄-8).

3. Utilisation selon les revendications 1 ou 2 d'une zéolithe de type faujasite.

4. Utilisation selon les revendications 1 à 3 d'une zéolithe de formule (I)
Mⁿ⁺_{x/n}[(AlO₂)ₓ(SiO₂)₁₉₂₋ₓ].zH₂O (I)
dans laquelle
• Mⁿ⁺ représente un cation de charge n, en général représente 1 ou 2 ;
• x représente le nombre de cations ;
• [ ] représente le réseau silico-aluminate **caractérisé par** le rapport Si/Al ;
• z représente le nombre de molécules d'eau zéolithiques.

5. Utilisation selon les revendications 1 à 4 d'une zéolithe choisie parmi les faujasites X dont le rapport Si/AI est compris entre 1 et 1,5 ou parmi faujasites Y dont le rapport Si/AI est compris entre 1,5 et 3 ou d'une zéolithe hydrophile.

6. Utilisation selon les revendications 1 à 5 pour apporter un oligoélément choisi parmi le cuivre, le manganèse, le zinc, le molybdène, le sélénium, le cobalt et le fer ou un mésoélément choisi parmi le calcium et le magnésium.

7. Utilisation selon les revendications 1 à 6 pour laquelle la quantité d'oligoélément apporté varie de 1,5 à 15% en masse de zéolithe.

8. Méthode de traitement de plantes comprenant l'utilisation selon les revendications 1 à 7.

9. Méthode selon la revendication 8 pour lutter contre les carences en fer ou chlorose ferrique ou pour le traitement de la vigne ou de rosiers.

10. Méthode de préparation d'une composition comprenant une zéolithe et un oligoélément définis selon les revendications 1 à 7 par échange d'ions de la zéolithe par le ou les cations de l'oligoélément ou du mésoélément choisi.

11. Méthode selon la revendication 10 réalisée dans un solvant non toxique ou réalisée dans de l'eau.

12. Méthode selon les revendications 10 ou 11 par échange d'un ion de la zéolithe choisi parmi NH₄⁺, K⁺, Na⁺ ou Ca²⁺.

13. Méthode selon les revendications 10 à 12 dont les sous-produits sont valorisables et choisis parmi les sels du cation échangé de la zéolithe et du contre-anion de l'oligoélément ou du mésoélément mis en oeuvre.

14. Méthode selon la revendication 13 pour laquelle le contre-anion de l'oligoélément ou du mésoélément est choisi parmi NO₃⁻, SO₄²⁻, PO₄³⁻.

## Patentansprüche

1. Verwendung eines Zeoliths, der in besonderer Weise präpariert oder modifiziert ist oder von natürlichem Ursprung ist, dessen Na⁺-Kationen außerhalb des Gitters durch andere Kationen ausgetauscht sind, die in der Mikroernährung von Pflanzen involviert sind, um den Pflanzen as-similierbare Spurenelemente oder Mesoelemente in einer Menge von 0,1 bis 25 % der Masse des Zeoliths zuzuführen.

2. Verwendung nach Anspruch 1,
- eines Zeoliths, dessen Porenöffnung 12 Atome beträgt und der ausgewählt ist aus AFI (AlPO₄-5), AFR (SAPO-40), AFS (MAPSO-46), AFY (CoAPO-50), ATO (AlPO₄.31), ATS (MAPO-36), BEA (Beta), BOG (Boggsit), BPH (Beryllophosphat-H), CAN (Cancrinit), CON (CIT-1), DFO (DAF-1), EMT (EMC-2), FAU (Faujasit), GME (Gmelinit), LTL (Linde Typ L), MAZ (Mazzit), MEI (ZSM-18), MOR (Mordenit), MTW (ZSM-12), OFF (Offretit), RON (Roggianit), VET (VPI-8); oder
- eines Zeoliths, dessen Porenöffnung 10 Atome beträgt und der ausgewählt ist aus AEL (AlPO₄-11), AFO (AlPO₄-41), AHT (AlPO₄-H2), DAC (Dachiardit), EPI (Epistilbit), EUO (EU-1), FER (Ferrierit), HEU (Heulandit), LAU (Laumontit), MEL (ZSM-11), MFI (ZSM-5), MFS (ZSM-57), MTT (ZSM-23), NES (NU-87), -PAR (Partheit), STI (Stilbit), TON (Theta-1), WEI (Weinebeneit), WEN (Wenkit); oder
- eines Zeoliths, dessen Porenöffnung 8 Atome beträgt und der ausgewählt ist aus ABW (Li-A (Barrer and White)), AEI (AlPO₄-18), AFT (AlPO₄-52), AFX (SAPO-56), APC (AlPO₄-C APD (AlPO₄-D ATN (MAPO-39), ATT (AlPO₄-12-TAMU), ATV (AlPO₄-25), AWW (AlPO₄-22), BIK (Bikitait), BRE (Brewsterit), CAS (Cäsiumaluminiumsilicat (Araki)), CHA (Chabazit), DDR (Deca-dodecasil 3R), EAB (TMA-E), EDI (Edingtonit), ERI (Erionit), GIS (Gismondin), G00 (Goosecreekit), JBW (NaJ 25 (Barrer and White)), KFI (ZK-5), LEV (Levyne), LTA (Linde Type), MER (Merlinoit), MON (Montesommait), NAT (Natrolit), PAU (Paulingit), PI-H (Phillipsit), RHO (Rho), RTE (RUB-3), RTH (RUB-13), THO (Thomsonit), VNI (VP1-9), YUG (Yugawaralit), ZON (ZAPO-M1); oder
- eines Zeoliths, dessen Porenöffnung 9, 14, 18 oder 20 Atome beträgt und der ausgewählt ist aus CHI (Chiavennit), LOV (Lovdarit), RSN (RUB-17), VSV (VPI-7), CLO (Cloverit), VFI (VPI-5), AET (AlPO₄-8).

3. Verwendung nach den Ansprüchen 1 oder 2 eines Zeoliths des Faujasit-Typs.

4. Verwendung nach den Ansprüchen 1 bis 3 eines Zeoliths der Formel (I),
Mⁿ⁺_{x/n}[(AlO₂)ₓ(SiO₂)₁₉₂₋ₓ].zH₂0 (I)
in der
• Mⁿ⁺ ein Kation der Ladung n darstellt, im Allgemeinen 1 oder 2 darstellt;
• x die Kationenanzahl darstellt;
• [ ] das Silico-Aluminat-Gitter darstellt, das durch das Verhältnis Si/Al gekennzeichnet ist;
• z die Anzahl der Wassermoleküle des Zeoliths darstellt.

5. Verwendung nach den Ansprüchen 1 bis 4 eines Zeoliths, der ausgewählt ist aus den Faujasiten X, deren Verhältnis Si/Al zwischen 1 und 1,5 liegt, oder Faujasiten Y, deren Verhältnis Si/Al zwischen 1,5 und 3 liegt oder eines hydrophilen Zeoliths.

6. Verwendung nach den Ansprüchen 1 bis 5, um ein Spurenelement, ausgewählt aus Kupfer, Mangan, Zink, Molybdän, Selen, Cobalt und Eisen, oder ein Mesoelement, ausgewählt aus Calcium und Magnesium, zuzuführen.

7. Verwendung nach den Ansprüchen 1 bis 6, für die die zugeführte Spurenelementmenge von 1,5 bis 15 % der Massedes Zeoliths variiert.

8. Verfahren zum Behandeln von Pflanzen, die Verwendung nach den Ansprüchen 1 bis 7 umfassend.

9. Verfahren nach Anspruch 8, um gegen Eisenmangel oder Eisenmangelchlorose vorzugehen, oder für die Behandlung von Wein- oder Rosenstöcken.

10. Verfahren zur Herstellung einer Zusammensetzung, die ein Zeolith und ein Spurenelement, wie gemäß den Ansprüchen 1 bis 7 definiert, enthält, durch Auswechseln von Ionen des Zeoliths durch das oder die Kationen des gewählten Spurenelements oder Mesoelements.

11. Verfahren nach Anspruch 10, durchgeführt in einem nichttoxischen Lösungsmittel oder durchgeführt in Wasser.

12. Verfahren nach den Ansprüchen 10 oder 11 durch Auswechseln eines Zeolithions, ausgewählt aus NH₄⁺, K⁺, Na⁺ oder Ca²⁺.

13. Verfahren nach den Ansprüchen 10 bis 12, dessen Nebenprodukte verwertbar sind und ausgewählt sind aus den Salzen des ausgewechselten Kations des Zeoliths und des Gegen-Anions des umgesetzten Spurenelements oder Mesoelements.

14. Verfahren nach Anspruch 13, für das das Gegen-Anion des Spurenelements oder des Mesoelements ausgewählt ist aus NO₃⁻, SO₄²⁻, PO₄³⁻.

## Claims

1. Use of a zeolite prepared specifically or modified or of natural origine, which extra-lattice Na+ cations are configured to be exchanged with other cations involved in plant micronutrition, to provide plants with assimilable micronutrients or mesoelements in a quantity of 0.1 to 25% by mass of zeolite.

2. Use according to claim 1
- of a zeolite of which the pore opening is 12 atoms and which is chosen from AFI (AlPO₄-5), AFR (SAPO-40), AFS (MAPSO-46), AFY (CoAPO-50), ATO (AIPO₄.31), ATS (MAPO-36), BEA (Beta), BOG (Boggsite), BPH (Beryllophosphate-H), CAN (Cancrinite), CON (CIT-1), DFO (DAF-1), EMT (EMC-2), FAU (Faujasite), GME (Gmelinite), LTL (Linde type L), MAZ (Mazzite), MEI (ZSM-18), MOR (Mordenite), MTW (ZSM-12), OFF (Offretite), RON (Roggianite), VET (VPI-8); or
- of a zeolite of which the pore opening is 10 atoms and which is chosen from AEL (AlPO₄-11), AFO (AlPO₄-41), AHT (AlPO₄-H2), DAC (Dachiardite), EPI (Epistilbite), EUO (EU-1), FER (Ferrierite), HEU (Heulandite), LAU (Laumontite), MEL (ZSM-11), MFI (ZSM-5), MFS (ZSM-57), MTT (ZSM-23), NES (NU-87), -PAR (Partheite), STI (Stilbite), TON (Theta-1), WEI (Weinebeneite), WEN (Wenkite); or
- of a zeolite of which the pore opening is 8 atoms and which is chosen from ABW (Li-A (Barrer and White)), AEI (AlPO₄-18), AFT (AlPO₄-52), AFX (SAPO-56), APC (AlPO₄-C), APD (AlPO₄-D), ATN (MAPO-39), ATT (AlPO₄-12-TAMU), ATV (AlPO₄-25), AWW (AlPO₄-22), BIK (Bikitaite), BRE (Brewsterite), CAS (Cesium Aluminosilicate (Araki)), CHA (Chabazite), DDR (Deca-dodecasil 3R), EAB (TMA-E), EDI (Edingtonite), ERI (Erionite), GIS (Gismondine), GOO (Goosecreekite), JBW (NaJ (Barrer and White)), KFI (ZK-5), LEV (Levyne), LTA (Linde type A), MER (Merlinoite), MON (Montesommaite), NAT (Natrolite), PAU (Paulingite), PI-H (Phillilpsite), RHO (Rho), RTE (RUB-3), RTH (RUB-13), THO (Thomsonite), VNI (VP1-9), YUG (Yugawaralite), ZON (ZAPO-M1); or
- of a zeolite of which the pore opening is 9, 14, 18 or 20 atoms and which is chosen from CHI (Chiavennite), LOV (Lovdarite), RSN (RUB-17), VSV (VPI-7), CLO (Cloverite), VFI (VPI-5), AET (AlPO₄-8).

3. Use according to claims 1 or 2 of a faujasite-type zeolite.

4. Use according to claims 1 to 3 of a zeolite of formula (I)
Mⁿ⁺_{x/n}[(AlO₂)ₓ(SiO₂)₁₉₂₋ₓ].zH₂O (I)
wherein
- Mⁿ⁺ represents a cation of charge n, in general represents 1 or 2;
- x represents the number of cations;
- [ ] represents the silico-aluminate lattice **characterized by** the Si/Al ratio;
- z represents the number of zeolitic water molecules.

5. Use according to claims 1 to 4 of a zeolite chosen from the X faujasites of which the Si/Al ratio is between 1 and 1.5 or among the Y faujasites of which the Si/Al ratio is between 1.5 and 3, or of a hydrophilic zeolite.

6. Use according to claims 1 to 5 for providing a micronutrient chosen from copper, manganese, zinc, molybdenum, selenium, cobalt and iron or a mesoelement chosen from calcium and magnesium.

7. Use according to claims 1 to 6 for which the quantity of micronutrient supplied varies from 1.5 to 15% by mass of zeolite.

8. Method for treating plants including the use according to claims 1 to 7.

9. Method according to claim 8 for fighting iron deficiencies or iron chlorosis for the treatment of grapevines or rosebushes.

10. Method for preparing a composition including a zeolite and a micronutrient defined according to claims 1 to 7 by exchanging zeolite ions with the cation(s) of the micronutrient or the mesoelement chosen.

11. Method according to claim 10 performed in a non-toxic solvent or performed in water.

12. Method according to claims 10 or 11 by exchange of a zeolite ion chosen from NH₄⁺, K⁺, Na⁺ or Ca²⁺.

13. Method according to claims 10 to 12 of which the by-products can be reclaimed and chosen from the salts of the exchanged cation of the zeolite and the counteranion of the micronutrient or the mesoelement implemented.

14. Method according to claim 13 for which the counteranion of the micronutrient and the mesoelement is chosen from NO₃⁻, SO₄²⁻, PO₄³⁻.
